# EUROPÄISCHE PATENTANMELDUNG

(11) **EP 2 641 469 A2**
(43) Veröffentlichungstag der Anmeldung: **25.09.2013**
(21) Anmeldenummer: 13001362.6
(22) Anmeldetag: 18.03.2013
(51) Int. Cl.: A01K 15/00

(54) **Strickhaltevorrichtung**

(30) Priorität: 20.03.2012 DE 102012005298
(71) Anmelder: Strasser, Josef, 84494 Niederbergkirchen (DE); Strasser, Klaus, 84494 Niederbergkirchen (DE); Strasser, Gerhard, 84494 Niederbergkirchen (DE)
(72) Erfinder: Strasser, Josef, 84494 Niederbergkirchen (DE); Strasser, Klaus, 84494 Niederbergkirchen (DE); Strasser, Gerhard, 84494 Niederbergkirchen (DE)
(74) Vertreter: Gössmann, Christoph Tassilo

(57) **Zusammenfassung**

Strickhaltevorrichtung, wobei diese eine Klemmvorrichtung 3 aufweist, der mit einer Umwicklung des Führungsstrickes ein sicheres Halten des Führungsstrickes durch die Führungsperson ermöglicht.

## Beschreibung

Die Erfindung betrifft eine Strickhaltevorrichtung, um einen Viehstricke festzuhalten.

Die Erfindung bezieht sich auf ein einfaches Hilfsmittel zur Verhütung von Unfällen beim Führen von Rindern, Pferden und anderen Großtieren, mit einer Strickhalfter.

Beim Umgang mit Rindern, Pferden und anderen Großtieren ist es oft notwendig, diese mit Hilfe eines Strickhalfters zu führen. Da sich die Tiere nicht immer dem Tierführer unterordnen, ist diese Arbeit häufig mit hohem Kraftaufwand verbunden. Üblicherweise werden die Tiere mit einem Strick, welchen der Tierbetreuer in der Hand hält, geführt.

Ein großes Problem ist dabei, dass der Führstrick nicht griffig ist und somit leicht aus der Hand des Tierführers entgleitet. Es passiert immer wieder, dass Tierführer den Strick um die Hand wickeln, um ein Entgleiten des Strickes aus der Hand zu vermeiden.

In der Praxis führt dies immer wieder zu Unfällen, wenn das Tier unvermutet versucht, sich loszureißen. Durch das Umwickeln des Strickes um die Hand ist ein notwendiges Auslassen meist nicht schnell genug möglich. Verletzungen an der Hand oder Arm, bis hin zu tödlichen Verletzungen durch Mitschleifen des Tierbetreuers eines nervös gewordenen Tieres sind keine Seltenheit.

Der vorliegenden Erfindung liegt die Aufgabe zu Grunde, ein einfaches Hilfsmittel zur Verfügung zu stellen, dass ein Umwickeln um die Hand der Führungsperson nicht mehr notwendig ist.

Diese Aufgabe wird durch die Strickhaltevorrichtung mit den Merkmalen des Patentansprüche gelöst.

Gegenstand der Erfindung ist Strickhaltevorrichtung, **dadurch gekennzeichnet, dass** diese eine Klemmvorrichtung aufweist, die mit einer Umwicklung des Führungsstrickes ein sicheres Halten des Führungsstrickes durch die Führungsperson ermöglicht.

Die erfindungsgemäße Strickhaltevorrichtung weist vorzugsweise einen vorzugsweise länglichen Griff und daran vorzugsweise eine vorzugsweise längliche Verlängerung des Griffes auf, die als Klemmvorrichtung zumindest zwei von einander beabstandete Kerben aufweist. Diese Kerben können vorzugsweise direkt in der länglichen Verlängerung eingebracht werden. Dabei ist unter einer Kerbe ein spitz zulaufender bzw. keilförmiger Einschnitt zu verstehen.

Bei einer bevorzugten Strickhaltevorrichtung, die zumindest zwei von einander beabstandete Kerben aufweist, werden die Kerben durch ein Dreiecke, vorzugsweise zwei Dreiecke gebildet, die mit einer Spitze an der längliche Verlängerung befestigt sind und so jeweils eine Kerbe zwischen Griff und Dreiecksschenkel bilden.

Bei einer weiteren bevorzugten Strickhaltevorrichtung werden die zumindest zwei von einander beabstandete Kerben, durch ein Trapez, bevorzugt zwei Trapeze gebildet, die jeweils mit der kürzeren der parallel zueinander liegenden Seiten an der längliche Verlängerung befestigt sind. In einer bevorzugten Ausführungsform weisen die Dreiecke oder die Trapeze noch eine nach außen offene Bohrungen auf, die vorzugsweise am Ende der der länglichen Verlängerung zugewandten Kerbe angeordnet sind, in denen der Strick geführt werden kann, vorzugsweise befinden die offenen Bohrungen sich bei einem Trapez nahe an der kürzeren der parallelen Seiten des Trapezes, nahe bei der Befestigung des Trapezes an der länglichen Verlängerung, vorzugsweise jedoch befinden sich diese offenen Bohrungen jeweils oben und unten nahe bei der Befestigung an der kürzeren parallelen Seiten des Trapezes.

Die erfindungsgemäße Strickhaltevorrichtung wird vorzugsweise aus einem Material gebildet, dass aus der Gruppe Metall, Kunststoff oder Holz ausgewählt wird, wobei Kunststoff bevorzugt ist.

Die erfindungsgemäße Strickhaltevorrichtung ist so gestaltet, dass der Führungsstrick mit einem Handgriff an der Klemmvorrichtung der Strickhaltevorrichtung fixiert und wieder gelöst werden kann. Die geschieht mit einer Umwicklung des Führungsstrickes um die Klemmvorrichtung.

Die Erfindung ermöglicht eine maximale Kraftübertragung des Tierführers auf den Halfter. Ein unbeabsichtigtes entgleiten aus der Hand wird vermieden. Ein Loslassen im Notfall ist jederzeit gewährleistet, da keine Körperteile umwickelt sind.

Die Strickhaltevorrichtung ist so gestaltet, dass dieser ergonomisch der Hand eines erwachsenen Menschen angepasst ist.

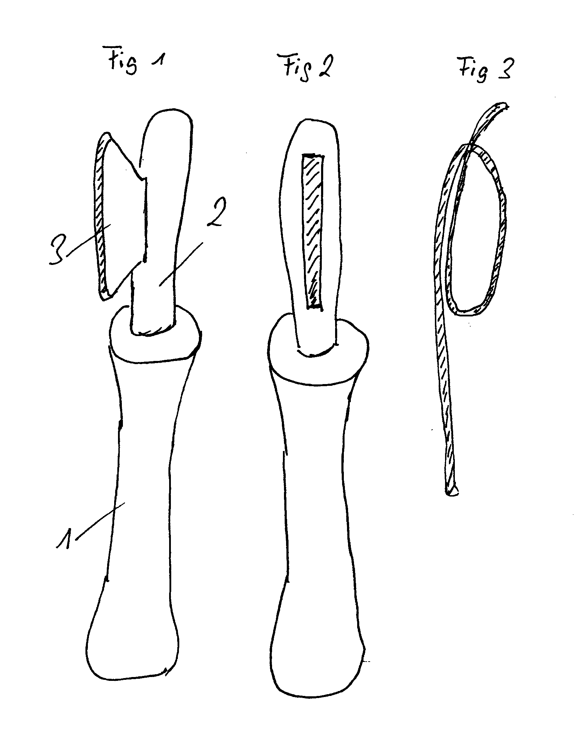

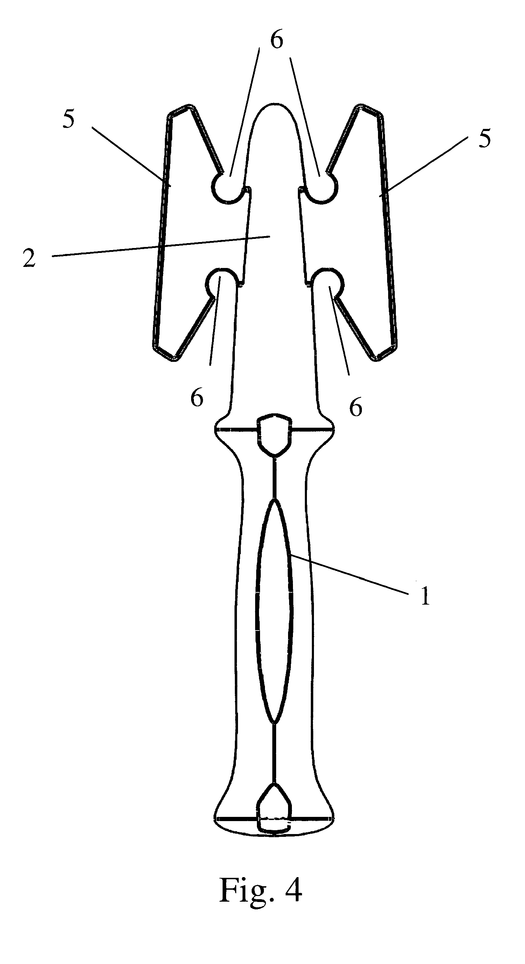

Die Ausführung der Erfindung ist in Figur 1-4 erläutert.

Figur 1 zeigt die Seitenansicht des Strickhaltegriffes.

Der Griffteil (1) ist ergonomisch der Hand des Tierführers angepasst und ist dem entsprechend zu dimensionieren.

Die Gesamtlänge des Griffteils beträgt vorzugsweise 12 cm. Am oberen Teil, der länglichen Verlängerung des Griffs (2) ist die Klemmvorrichtung (3) angebracht, um die der Führstrick (4) zu wickeln ist. Durch ein konisches Verjüngen des Abstandes vom oberen Teil (2) zur Klemmvorrichtung (3) wird erreicht, dass der Strick (4) am Haltegriff durch einfaches Anspannen eingeklemmt und dadurch fest verbunden wird.

Figur 2 zeigt die Vorderseite der Strickhaltevorrichtung.

Figur 3 zeigt die Schlaufenführung des Strickes, wie dieser um die Klemmvorrichtung 3 zu wickeln ist.

Figur 4 zeigt die erfindungsgemäßen Strickhaltevorrichtung mit länglichen Griff 1 und länglicher Verlängerung 2 mit zwei Trapezen 5 mit den nach außen offenen Bohrungen 6 für die Führung des Stricks.

## Patentansprüche

1. Strickhaltevorrichtung, **dadurch gekennzeichnet, dass** diese eine Klemmvorrichtung 3 aufweist, der mit einer Umwicklung des Führungsstrickes ein sicheres Halten des Führungsstrickes durch die Führungsperson ermöglicht.

2. Strickhaltevorrichtung nach Anspruch 1, **dadurch gekennzeichnet, dass** die Strickhaltevorrichtung einen länglichen Griff 2 und daran eine längliche Verlängerung 2 aufweist, die zumindest zwei in von einander beabstandete Kerben aufweist.

3. Strickhaltevorrichtung nach Anspruch 2, **dadurch gekennzeichnet, dass** die zumindest zwei von einander beabstandete Kerben, durch ein oder zwei Dreiecke gebildet werden, die mit einer Spitze an der längliche Verlängerung befestigt sind.

4. Strickhaltevorrichtung nach Anspruch 2, **dadurch gekennzeichnet, dass** die zumindest zwei von einander beabstandete Kerben, durch ein oder zwei Trapeze 4 gebildet werden, die mit der kürzeren der parallel zueinander liegenden Seiten an der längliche Verlängerung 2 befestigt sind.

5. Strickhaltevorrichtung nach Anspruch 1 bis 4, **dadurch gekennzeichnet, dass** die Klemmvorrichtung 3 eine oder mehrere nach außen offene Bohrungen 5 für den Strick aufweisen.

6. Strickhaltevorrichtung nach Anspruch 4, **dadurch gekennzeichnet, dass** sich bei einem Trapez nahe an der kürzeren der parallelen Seiten des Trapezes, nahe bei der Befestigung des Trapezes an der länglichen Verlängerung, sich eine oder mehrere offenen Bohrungen 5 jeweils oben und unten nahe bei der Befestigung an der kürzeren parallelen Seiten des Trapezes befinden.

7. Strickhaltevorrichtung nach Anspruch 1 bis 4, **dadurch gekennzeichnet, dass** die Strickhaltevorrichtung aus einem Material gebildet wird, dass aus der Gruppe Metall, Kunststoff oder Holz ausgewählt wird.
